Europäisches Patentamt

European Patent Office

Office européen des brevets

(11) Publication number: **0 162 614**
**A2**

# (12) EUROPEAN PATENT APPLICATION

(21) Application number: **85302976.7**

(22) Date of filing: **26.04.85**

(51) Int. Cl.⁴: **G 11 B 21/16**
**G 11 B 21/08, G 11 B 5/48**
**G 11 B 5/55**

(30) Priority: **23.05.84 US 613163**

(43) Date of publication of application:
**27.11.85 Bulletin 85/48**

(84) Designated Contracting States:
**BE DE FR GB IT LU NL SE**

(71) Applicant: **SEAGATE TECHNOLOGY**
**920 Disc Drive**
**Scotts Valley California 95066(US)**

(72) Inventor: **Kaczeus, Steven L.**
**230 Chico Avenue**
**Santa Cruz California 95060(US)**

(72) Inventor: **Hoppe, Robert**
**1900 Commercial Way**
**Santa Cruz California 95065(US)**

(72) Inventor: **Gatzen, Hans H.**
**1709 Via Palo Alto**
**Aptos California 95003(US)**

(74) Representative: **Bayliss, Geoffrey Cyril et al,**
**BOULT, WADE & TENNANT 27 Furnival Street**
**London EC4A 1PQ(GB)**

(54) **Improved rotary actuator for a disc drive.**

(57) The disclosure relates to a disc drive, in which the head/track included angle is minimised while providing the maximum arm stiffness with minimum inertia by providing a two-arm actuator (20, 21; 32) rotating about the common junction point (34) of the two arms. The two arms are mounted at an acute angle. The distal end (38) of the first arm (32) is stepped by a stepper motor (30) connected to the end of the arm. The distal end of the second arm (20, 21) carries the slider (42) and transducer (44). The gap of the transducer and main axis (56) of the slider are directly aligned with the main axis of the arm (21) so that the length of the arm between the pivot point and the point on the track being accessed is minimised.

./...

FIG. — 1

-1-

## IMPROVED ROTARY ACTUATOR FOR A DISC DRIVE

The invention is directed generally to the field of disc drives incorporating rotary actuators, and more particularly to a low mass arm which is directly aligned with the head transducer gap.

Disc drive machines record and reproduce information stored on concentric circular tracks on magnetic discs. Tracks are written and read by magnetic heads which must be accurately positioned over one of the tracks on the surface of the disc. Various methods have been used to position the heads. The two common types of head positioning mechanisms are linear and rotary head carriages.

Rotary actuators, in which the arm which carries the flexure, slider and transducer rotates about a pivot point have long been used in the disc drive art to position the head over the track. However, it has always been believed to be a requirement of such systems, that the arm be positioned to the side of the disc drive media, with a support structure for the head being cantilevered out at a ninety degree angle from the moving drive arm over the disc. The transducer head itself must then be mounted perpendicular to this cantilevered arm in order that the transducer head gap be properly aligned with the selected one of the concentric tracks. Such an arm design typically has a significant amount of mass and inertia.  This makes it very difficult to quickly move the head from track to track.

It is therefore an object of the present invention to provide a rotary head actuator in which the mass of the head supporting arm is minimized.  A second objective in the design of any such rotary actuator is to provide as much arm stiffness as possible so that the head can be accurately moved from track to track with minimal displacement from a center position due to any flexibility in the positioning arm.  However, usually the price to be paid for additional arm stiffness is additional mass, leading to an increase in inertia.  It is therefore an objective of the present invention to provide an improved rotary head carriage which maintains arm stiffness without undue increases in inertia.

A third problem which needs to be addressed in the design of any rotary actuator is maintenance of alignment of the transducer gap and the slider which carries the transducer tangent to the track being read.  Obviously, the relative included angle between the tangent at the point on the track to be read and the main axis of the transducer will vary as the head moves from the inner-most to the outer-most track.  This problem has typically been addressed through complex structural design of the head carrying arm of the rotary actuator.  An objective of the present invention is to provide a simple arm structure in which the relative included angle between the main axis of the transducer gap and slider and the tangent to the track being accessed is kept to a minimum.

Another objective of the present invention is to provide a rotary actuator and transducer carrying arm in which the included angle between transducer axis and track tangent is no more than 13 degrees.

A fourth problem with conventionally designed rotary actuators is their tendency to introduce off-track errors due to expansion and contraction of components over the operating temperature range. Therefore a further objective of the present invention is to provide a configuration of components such that expansion or contraction over the operating temperature range will be in a direction least likely to cause off-track positioning errors.

The objectives of the present invention in seeking to minimize the head/track included angle while providing the maximum arm stiffness with minimum inertia are achieved in the present invention by providing a two-arm actuator rotating about the common junction point of the two arms. The two arms are mounted at an acute angle. The distal end of the first arm is stepped by a stepper motor connected to the end of the arm. The distal end of the second arm carries the slider and transducer. The gap of the transducer and main axis of the slider are directly aligned with the main axis of the arm so that the length of the arm between the pivot point and the point on the track being accessed is minimized.

Other objects and advantages of the present invention will be understood after referring to the detailed description of the preferred embodiment and to the appended drawings wherein:

FIGURE 1 is a perspective view of a magnetic disc apparatus incorporating the rotary actuator of the present invention;

FIGURE 2 is a detailed view of the carriage arm, the head, and the flexure which is used to mount the head on the arm.

FIGURE 3 is a graph which represents the tradeoff to be made between stiffness, inertia, and head/track included angle which can be used to maximize the design points of the present invention;

FIGURE 4 is a graphical representation of the relationship between the pivot point of the carriage arm and the included angle between arm and track tangent;

FIGURE 5 is a schematic representation of the stepper motor drive shaft and band drive used to position the carriage in the present invention.

FIGURE 6A is a graphical representation of the thermal expansion characteristics of a conventionally designed rotary actuator.

FIGURE 6B is a graphical representation of the thermal expansion characteristics of the present invention.

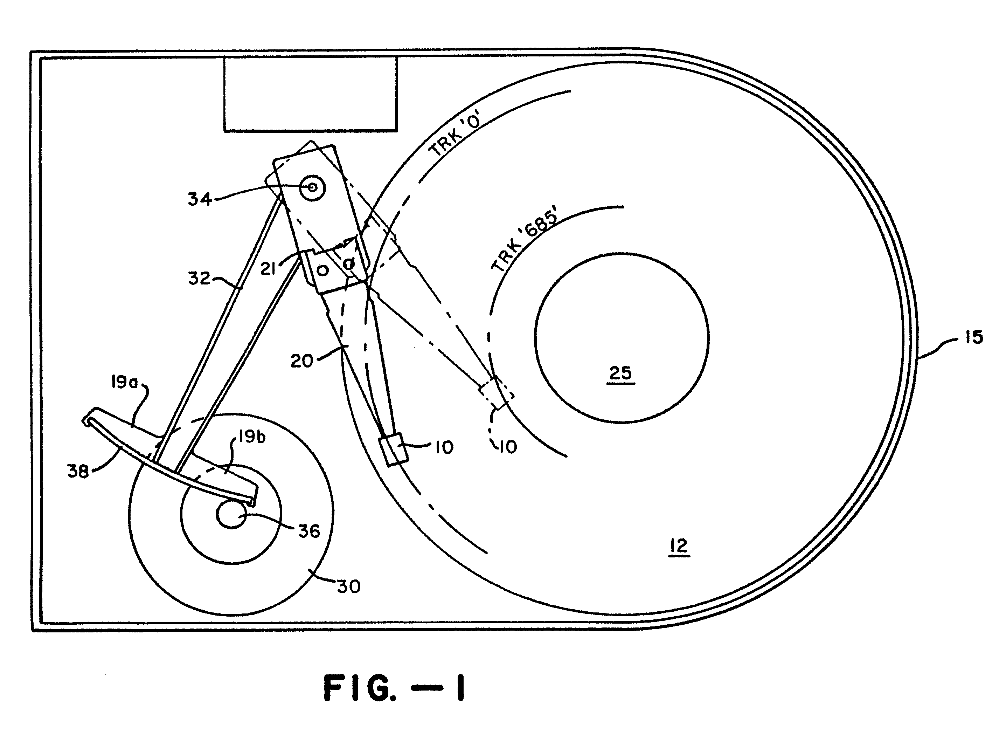

Figure 1 comprises a perspective view of the rigid magnetic disc, its enclosure and the rotary head carrying actuator. The apparatus can be characterized as "Winchester technology" since it employs a sealed, non-removable, lightly loaded head 10 which flies over a lubricated rigid disc 12. The enclosure 15 is provided to maintain a controlled ambient atmosphere for the spinning magnetic disc and magnetic head flying on an air bearing relative to the disc. It should be noted that while a single combination of carriage arm 21 and flexure mounted head 10 is shown in this figure, the mirror image of the combination could be mounted from the same carriage to read the underside of the disc 12 or either side of another disc on a stack of discs.

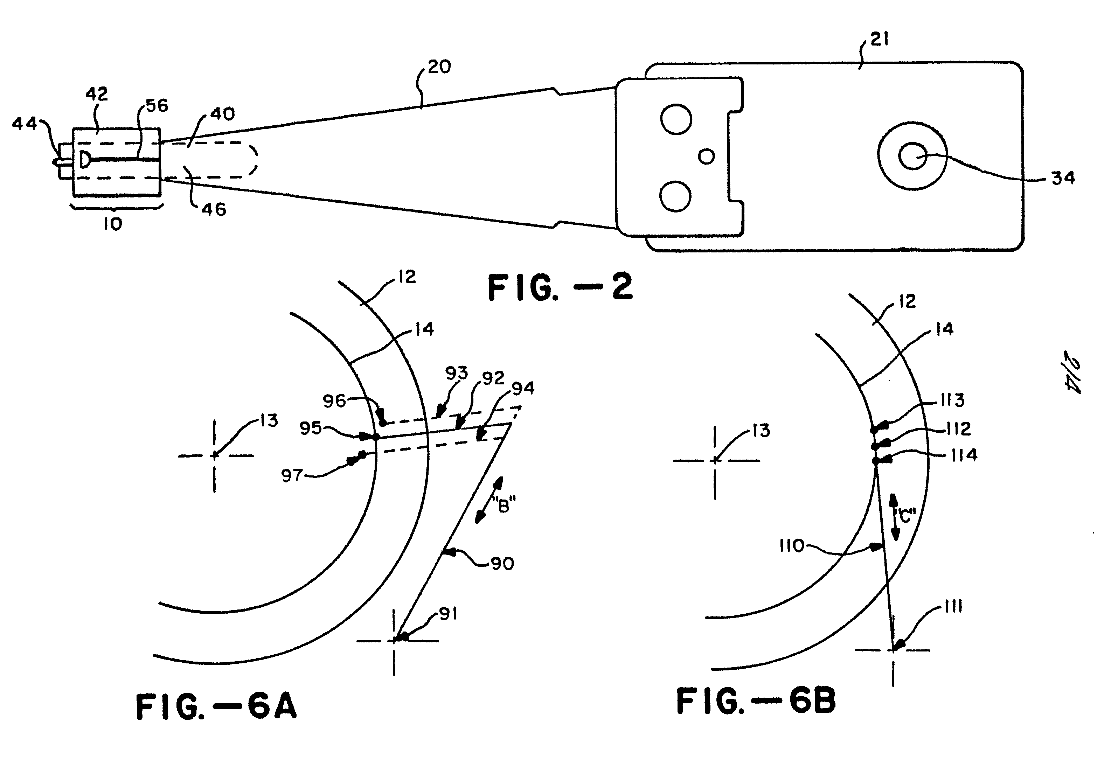

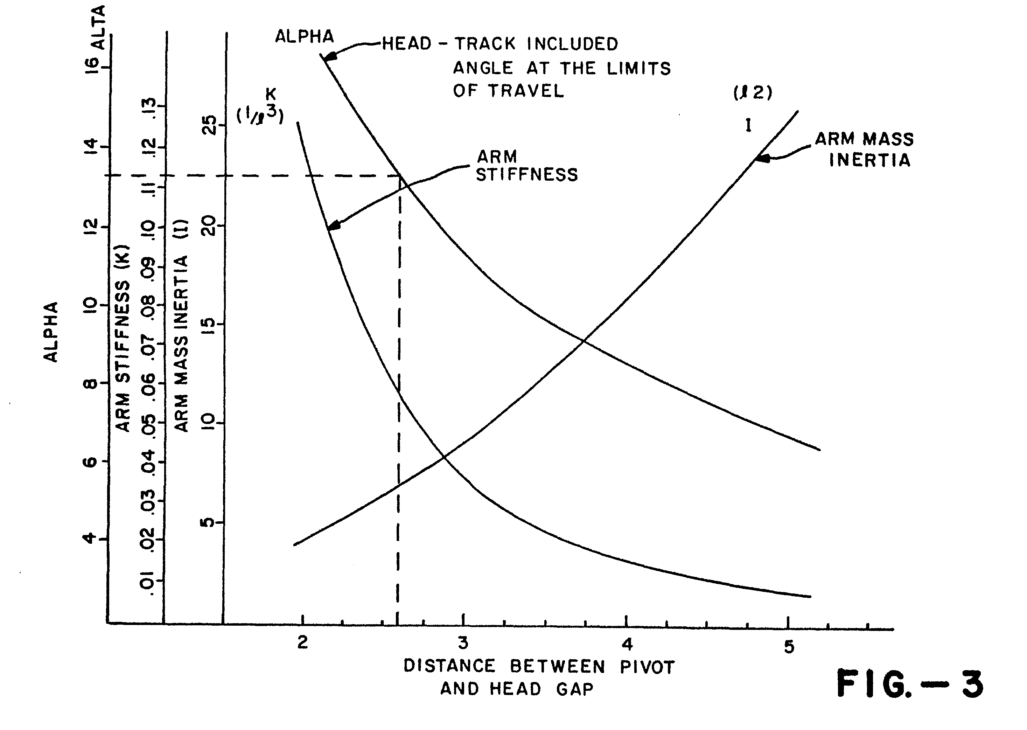

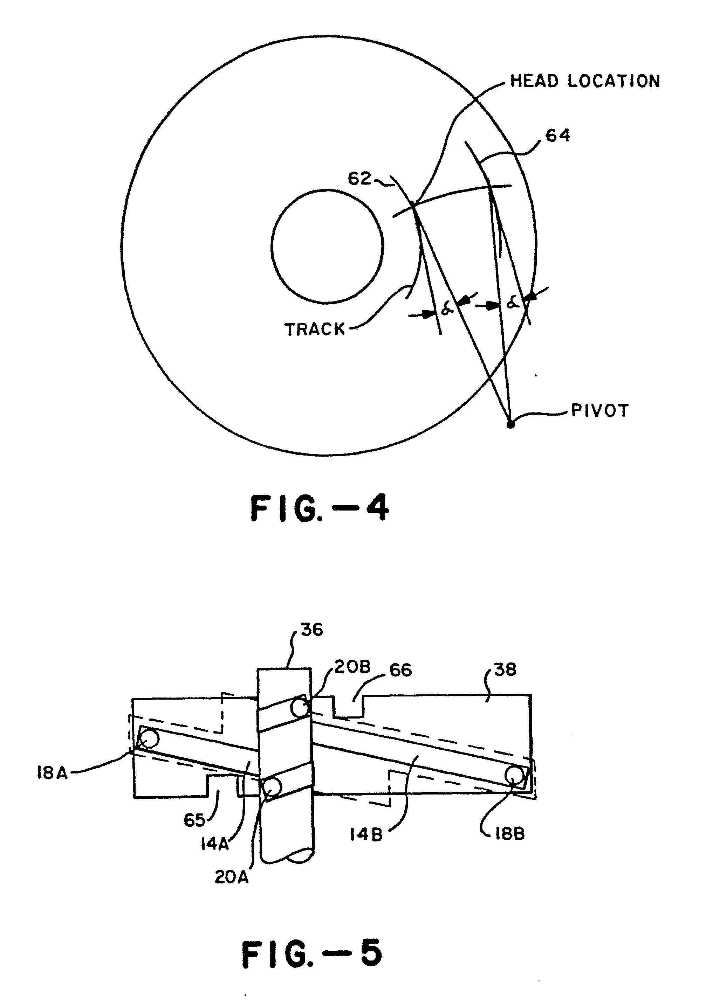

The housing 15 provides the required sealing of the ambient atmosphere. A constant speed motor 25 drives the disc 12 which will thus spin about its spin axis; a stepper motor 30 provides step rotational motion to the pivotal drive arm 32 and the carriage arm 21 which are joined together at a common pivot point 34. Details of the drive connection between the stepper motor 30 through its drive shaft 36 and the curved head portion 38 of the drive arm 32 are shown in Figure 5; details of the carriage arm, flexure and head are shown in Figure 2.

Referring again to Figure 1, the motor shaft 36 is connected to the curved head portion 38 through a helical band which winds and unwinds on the motor shaft 36 to convey the step rotational motion of the motor 30 to the carriage. Details of this combination are disclosed in the Applicants co-pending European Patent Application No. 85302314.1 entitled IMPROVED BAND DRIVE FOR DISC STORAGE APPARATUS and incorporated herein by reference.

Referring to Figure 5, the bands 14a and 14b are connnected to the driveshaft 36 by pins 20a, 20b. The opposite ends of the drive bands 14a and 14b are connected to the curved head portion 38 of the drive arm at points 18a, 18b by springs or other resilient means to maintain required tension on the bands.

To provide for free rotation of the pins 20a, 20b past the carriage head, cutouts 65, 66 are provided in the carriage head; alternatively the entire head can be

angularly shaped (as shown in dotted lines) to minimize the mass of this curved head portion.

Referring to Figure 2, details of the carriage arm 21 and flexure 20 which carry the head 10 comprising slider 42 and transducer 44 appear therein. The design of the slider 42 and transducer 44, the transducer including a gap for reading and writing information on the selected track, are all well known in the disc recording art. The flexure 20 mounts an expanded portion 40 welded to the flexure 20. The distal end of the expanded portion 40 is attached to the slider 42 with epoxy or other adhesive means thus minimizing the weight of this mechanical connection. The critical element to note is that the major axis of the carriage arm 21 which runs lengthwise of the carriage through the common pivot point 34 is directly aligned with and in fact coincides with a major axis 56 of the head 10. It is this straight-on connection of the head and carriage arm that allows for minimization of the weight included in the carriage arm.

The significance of this feature can be appreciated from a study of Figure 3 which shows the graphical analysis utilized to choose the necessary design points for the head and arm combination. The key limitation is the angle "alpha" which is the head/track included angle at the limits of travel between the inner-most track 62 and the outer-most track 64 which are graphically represented in Figure 4. The angle alpha can be seen to be the included angle between the tangent to the inner track 62 at the point at which it is read and the center line of the carriage arm 21. The pivot point of this carriage arm is selected to provide that the center track of the disc to be read constitutes a point of symmetry. It has been experimentally concluded that the maximum angle alpha which is tolerable for accurate reading and writing of data on the disc tracks is 13 degrees. It is also apparent from the graph of Figure 3 that the stiffness constant which varies inversely with the cube of the length and which should be as large as possible diminishes dramatically with the distance between pivot point 34 and the transducer gap. It is also apparent that the arm mass inertia which varies directly with the square of the length L between gap and pivot 34 increases with increased distance. Therefore, it has been found that an excellent maximum alpha can be chosen at about 13 degrees, resulting in an arm length L between pivot 34 and head gap of about 2.6 inches. It is apparent from a study of Figure 3 that this will provide a relatively high stiffness constant K while minimizing the arm mass inertia. This combination will provide for a transducer which can consistently accurately read and write information on the chosen track while the maximization of arm stiffness and minimization of inertia will provide for high accuracy track selectivity, minimization of track to track gap, and high speed of movement of the arm from track to track.

As previously mentioned another problem with rotary actuators of conventional design is their susceptibility to off-track positional errors due to thermally induced expansion or contraction of component parts. This can easily be seen by examining Figure 6A. In Figure 6A, the disc 12 spins about its center 13. One of the multiple circular concentric data tracks 14 is shown. A conventional rotary actuator consists of two major elements: 1) a driven arm 90 which pivots about a point 91; and, 2) a second arm 92, mounted to the driven arm 90, which carries the read/write heads. The driven arm 90 is typically made of aluminum or other light weight metal to minimize mass. Such materials, however, have a relatively large coefficient of thermal expansion, since the material is usually selected to match the

0162614

coefficient of thermal expansion of the base casting. The second arm 92 which carries the read/write heads consists primarily of the flexure which dynamically mounts the heads. In the industry this flexure is typically comprised of stainless steel which has a relatively small coefficient of thermal expansion over the same temperature range. This means that the majority of the expansion within the system is in the driven arm 90 along path "B". The extremes of position of the head carrying arm 92 are represented by dotted lines 93, 94. The amount of expansion has been exaggerated for purposes of illustration. Point 95 represents the nominal on-track position of the read/write head when the actuator selects the example data track 14. Since the driven arm 90 is not substantially parallel with the tangent to track 14 at the point being accessed, expansion or contraction of the driven arm 90 along path "B" with changes of temperature tends to pull the read/write heads off track as represented by points 96, 97.

That the present invention tends to alleviate this problem can be seen by examination of Figure 6B. Figure 6B also illustrates the disc 12 with its axis of rotation 13 and an exemplary data track 14. The present invention comprises a head carrying arm 110 which mounts the read/write heads and the flexure which carries the read/write heads in a straight line from the pivot point 111 of the arm to a point tangent to the track being accessed. This means that thermal expansion of the system will be along path "C" or substantially parallel to the tangent of the accessed track at the point being accessed. The nominal position of the read/write head when the example track 14 is being referenced is represented by point 112. The extremes of position for the read/write heads due to thermal expansion or contraction are represented on Figure 6B by points 113 and 114 respectively. The range of thermally induced expansion and contraction is greatly exaggerated for illustration purposes, and will in fact be significantly less than in the previously discussed embodiment since the aforementioned stainless steel flexure comprises a major portion of the arm 110. As can be seen from Figure 6B, since the arm 110 is substantially tangent to the track being accessed, thermal expansion and contraction is more nearly parallel to the data tracks, reducing the amount of positioning error.

Modifications of the present invention may become apparent to one skilled in the arts who has studied the above invention disclosure. For example, other forms of band drive may be used, although possibly not so efficiently. Other head flexure mountings may be developed which accomplish an equivalent end of maintaining the alignment of the main axis of the slider transducer combination to pass through the pivot point of the carriage arm substantially in conjunction with the main axis of the arm itself. Therefore, the scope of the present invention is to be limited only by the appended claims.

CLAIMS:

1.    A device for supporting a transducer in operating sensing position over a recording medium, said device comprising

a slider having a transducer affixed thereto, said slider having a major axis extending approximately tangent to the track to be read at the centre of the recording medium;

an arm assembly movable about a pivot, suspension means fastened to said arm assembly and said slider for holding said slider on said arm assembly so that said major axis extends through said pivot.

2.    A device as claimed in Claim 1 wherein said recording medium is a magnetic recording disc.

3.    A device as claimed in Claim 1 or Claim 2 wherein said arm has a major axis extending the length of said arm and substantially parallel to the major axis of the slider.

4.    A device as claimed in any of Claims 1 to 3 wherein said recording medium has a plurality of concentric recording tracks thereon and said device further comprising means for moving said arm rotationally about said pivot to move said transducer from track to track.

5.    A device as claimed in Claim 4 wherein the included angle between the major axis of said slider and a tangent to the innermost or outermost track is no greated than 13 degrees.

the major axis of said arm and said slider extend through said pivot.

7.  A device as claimed in any of Claims 4 to 6 wherein said moving means comprise a drive arm mounted at an acute angle to said slider carrying arm at said pivot, and stepper motor means for moving said drive arm, whereby said head is selectively positioned over one of said tracks.

8.  A device as claimed in Claim 7 wherein said drive arm includes a curved head portion, said motor being connected to said curved head portion through a band which rests on said curved head portion as it unwraps from the shaft of said motor.

9.  A device as claimed in any of Claims 4 to 8 wherein the mass of said arm and the distance between said transducer and said pivot are selected as a function of the desired maximum included angle.

10. Head positioning apparatus for positioning magnetic read/write heads relative to a disc in a record/playback system, the disc magnetically storing information in concentric tracks, comprising

a rotary stepper motor mounted to the machine chassis with the motor drive shaft extending therefrom

a carriage which is coupled to said motor to move in a rotary path about a pivot point adjacent to said disc to move said read/write head from track to track,

said read/write head comprising a slider having a transducer affixed thereto, said slider being connected to said pivot point through a flexure and an arm, said slider said flexure and said arm each having a major axis, the axes extending in parallel through said pivot point.

11. A device as claimed in Claim 10 wherein the major axis of the arm is substantially tangent to the center track of the concentric tracks on said disc.

12. A device as claimed in Claim 11 wherein the included angle between the major axis of the slider and a tangent to the innermost or outermost track of the disc at the point accessed is no more than 13 degrees.

13. A device as claimed in Claim 12 wherein the major axes of said arm said flexure and said slider coincide and extend through said pivot.

FIG. — I

0162614

FIG. — 2

FIG. — 6A

FIG. — 6B

2/4

0162614

FIG. — 3

HEAD LOCATION

64

62

TRACK

α   α

PIVOT

FIG.—4

36

20B   66   38

18A

65

14A

20A

14B   18B

FIG.—5